# EUROPÄISCHE PATENTSCHRIFT

(11) **EP 1 664 955 B1**
(45) Veröffentlichungstag und Bekanntmachung des Hinweises auf die Patenterteilung: **06.08.2008**
(21) Anmeldenummer: 04765588.1
(22) Anmeldetag: 24.09.2004
(51) Int. Cl.: G05B 23/02

(54) **VERFAHREN UND VORRICHTUNG ZUR ERMITTLUNG DER URSACHEN VON STÖRUNGEN UND LEISTUNGSBEGRENZUNGEN IN ANLAGEN**
METHOD AND DEVICE FOR DETERMINING THE CAUSES OF MALFUNCTION AND PERFORMANCE LIMITATION IN INSTALLATIONS
PROCEDE ET DISPOSITIF POUR DETERMINER LES CAUSES DE DEFAILLANCES ET DE LIMITATIONS DE RENDEMENT DANS DES INSTALLATIONS

(30) Priorität: 26.09.2003 DE 10345121
(43) Veröffentlichungstag der Anmeldung: 07.06.2006
(73) Patentinhaber: SIEMENS AKTIENGESELLSCHAFT, 80333 München (DE)
(72) Erfinder: HAAKS, Stefan, 91052 Erlangen (DE); MICHAELIS, Gerd, 91096 Möhrendorf (DE); WEGNER, Christian-Marius, 91522 Ansbach (DE)
(86) Internationale Anmeldenummer: PCT/EP2004/010746
(87) Internationale Veröffentlichungsnummer: WO 2005/031486

(56) Entgegenhaltungen:
- EP-A- 0 428 135
- WO-A-95/11484
- DE-A- 4 207 354
- PATENT ABSTRACTS OF JAPAN Bd. 0092, Nr. 39 (P-391), 25. September 1985 (1985-09-25) & JP 60 091414 A (MITSUBISHI DENKI KK), 22. Mai 1985 (1985-05-22)

## Beschreibung

Die Erfindung betrifft ein Verfahren und eine Vorrichtung zur Ermittlung der Ursachen von Störungen und Leistungsbegrenzungen in Anlagen.

Technische Anlagen stellen in zunehmendem Masse komplexe Systeme mit einer Vielzahl technischer Einrichtungen dar, die miteinander in Wechselwirkung stehen. Anlagen zur Herstellung durchlaufender Warenbahnen, z.B. Papier, Textilien, Kunststoff- oder Metallfolien zeichnen sich durch besonders komplexe Kombinationen aus Einrichtungen zur Energieverteilung, Antriebssystemen und Automationssystemen aus.

Gleichzeitig konzentrieren sich viele Anlagenbetreiber zunehmend auf ihren Kernprozess, d.h. den verfahrenstechnischen Prozess, und weniger auf die einzelnen technischen Komponenten (z.B. Antrieb- und Automatisierungskomponenten), die für den verfahrenstechnischen Prozess benötigt werden.

Aus diesem Grund und aufgrund der zunehmenden Komplexität der Anlagen fällt es vielen Anlagenbetreibern schwer, die Ursachen von Störungen sowie leistungsbegrenzende Faktoren, d.h. Faktoren, die die Leistungsfähigkeit einer Anlage im störungsfreien Betrieb, im Fall einer Papierfabrik z.B. die Geschwindigkeit einer durchlaufenden Papierbahn, in ihren Anlagen zu ermitteln.

Entsprechend fällt es vielen Anlagenbetreibern schwer, den technischen Zustand ihrer Anlage zu bewerten, somit frühzeitig potentielle Probleme zu ermitteln bzw. Verbesserungspotentiale zu ermitteln und frühzeitig verbesserungsmaßnahmen einzuleiten.

Häufig werden Probleme in einer Anlage erst erkannt, wenn sich das Problem durch eine Störung des Anlagenbetriebs, im Fall einer Anlage zur Papierherstellung z.B. durch einen Riss der Papierbahn, bemerkbar macht und unter Umständen bereits eine Beeinträchtigung des Anlagenbetriebes bis hin zum Stillstand der Produktion verursacht. Viele Anlagenbetreiber versuchen das Problem dann so zu lösen, dass sie Experten für den Teilbereiche der Anlage bestellen und koordinieren, in dem sich das Problem bemerkbar gemacht hat. Die Experten untersuchen den betroffenen Teilbereich der Anlage und es geling meistens, die Probleme zu beheben. Die Problembehebung zeichnet sich allerdings nicht durch eine besondere große Nachhaltigkeit aus. Schon nach kurzer Zeit tauchen an gleicher oder ähnlicher Stelle in der Anlage wieder Probleme auf.

Ähnliches gilt für Versuche, die Leistungsfähigkeit von Anlagen zu erhöhen. Viele Anlagenbetreiber versuchen selbst, die leistungsbegrenzenden Faktoren in ihren Anlagen zu finden. Haben sie in einem Teilbereich der Anlage einen solchen Faktor gefunden, so bestellen sie Experten, um Verbesserungsmaßnahmen durchzuführen. Wird zum Beispiel von dem Anlagenbetreiber festgestellt, dass ein Regelungsventil nicht optimal eingestellt ist, so wird er für eine Nachoptimierung des Reglers einen Regelungsspezialisten bestellen. Leider zeichnen sich auch.diese Maßnahmen häufig nicht durch hohe Nachhaltigkeit aus. Die Verbesserungen sind nur von kurzer Zeit oder entsprechen nicht den Erwartungen.

Viele Lösungen und technische Bewertungen sind deshalb oft nur partiell und beruhen auf empirischen Erfahrungen von Experten für einzelne Teilbereiche einer Anlage. Insgesamt führt dies dazu, dass in viele Anlagen Störungen nicht nachhaltig beseitigt, Leistungserhöhungen nicht nachhaltig realisiert, verbesserungspotentiale nicht ausgeschöpft werden, sowie Leistungsbegrenzende oder störende Faktoren nicht frühzeitig genug identifiziert werden.

Aus der DE 42 07 354 A ist ein verfahren gemäß Oberbegriff des Patentanspruchs 1 bzw. eine Vorrichtung gemäß Oberbegriff des Patentanspruchs 11 bekannt. Durch dieses Verfahren bzw. diese Vorrichtung können eine Fehlerdiagnose und eine Wartung verschiedener Vorrichtungen wie industrieller Geräte sowie aus diesen bestehender Systeme im Wege der Wechselwirkung durch eine Bedienungsperson durchgeführt werden.

Es ist Aufgabe der vorliegenden Erfindung, ein Verfahren und eine Vorrichtung anzugeben, die mit verhältnismäßig geringem Aufwand eine frühzeitige Identifizierung leistungsbegrenzender und störender Faktoren in einer Anlage erlauben und eine nachhaltige Störungsbeseitigung und Leistungserhöhung in einer Anlage ermöglichen.

Die Lösung dieser Aufgabe gelingt erfindungsgemäß durch ein Verfahren gemäß Patentanspruch 1 und eine Vorrichtung gemäß Patentanspruch 11. Vorteilhafte Ausgestaltungen der Erfindung sind jeweils Gegenstand der Unteransprüche.

Das erfindungsgemäße verfahren geht von der Überlegung aus, dass eine nachhaltige Störungsbeseitigung oder Leistungserhöhung nur dann möglich ist, wenn Wirkungsketten zwischen verschiedenen technischen Einrichtungen in einer Anlage ermittelt und bei der Ursachenfindung für Störungen und Leistungsbegrenzungen berücksichtigt werden. Die Erfassung der Wirkungsketten ist dadurch möglich, dass bei der Ursachenfindung auf das in einer größeren Zahl von Anlagen gesammelte Wissen über Störungen oder Leistungsbegrenzungen zurückgegriffen wird. Das in diesen Anlagen gesammelte Wissen kann sich über eine Vielzahl technischer Einrichtungen in verschiedensten Anlagen erstrecken und somit einen breiten Wissenspool über mögliche Ursachen für Störungen oder Leistungsbegrenzungen in einer zu untersuchenden Anlage darstellen.

Für die Ermittlung der Wirkungsketten in einer Anlage ist es allerdings notwendig, das Expertenwissen mit dem intern in der Anlage vorhandenes Wissen zu verknüpfen. Es wird deshalb in einem nächsten Schritt ein Fragenkatalog mit Fragen zu den möglichen Ursachen generiert. Die Fragen werden Beschäftigten des Betriebes gestellt und Antworten zu diesen Fragen eingeholt. Während bisher nur einige wenige Experten einige wenige Teilbereiche einer Anlage untersucht haben und somit nur das Wissen einiger weniger Beschäftigter in die Untersuchungen eingeflossen ist, kann gemäß der Erfindung das Wissen einer Vielzahl von Beschäftigten der Anlage in unterschiedlichsten Anlagenteilen in die Ursachenfindung einbezogen werden. Diese Wissen kann anhand des Fragenkataloges strukturiert und effektiv abgefragt werden, so dass der Aufwand für das Verfahren gering gehalten werden kann. Durch Auswertung der Antworten der Beschäftigten auf die Fragen des Fragenkataloges können anschließend die Ursachen von Störungen und Leistungsbegrenzungen in der zu untersuchenden Anlage ermittelt werden.

Durch das Verfahren wird somit eine standardisierte und systematische Vorgehensweise ermöglicht. Die erzielbaren Ergebnisse sind deshalb mit geringem Aufwand nachvollziehbar, das Verfahren ist beliebig wiederholbar und Ergebnisse, die in unterschiedlichen Anlagen oder in der gleichen Anlage zu unterschiedlichen Zeitpunkten gewonnen wurden, können verglichen und einem Benchmark zugeführt werden. Insgesamt ist somit eine quasi-objektive Analyse und Bewertung des technischen Zustandes einer Anlage möglich, die es erlaubt, potentielle und tatsächliche Ursachen von Störungen und Leistungsbegrenzungen zu ermitteln.

Der Aufwand für die Befragung der Beschäftigten wird dadurch noch verringert, dass zusätzlich Daten über die zu untersuchende Anlage bereitgestellt werden. Es können somit aus der Vielzahl der Daten über Ursachen von Störungen und Leistungsbegrenzungen diejenigen ausgewählt werden, die für die zu untersuchenden Anlage relevant sind und somit ein Fragenkatalog generiert werden, der nur Fragen enthält, die die zu untersuchende Anlage betreffen.

Dabei sind dabei die Daten über die Ursachen jeweils Zielgruppen zugeordnet, die Daten über die zu untersuchende Anlage enthalten Angaben über zu befragende Zielgruppen und der Fragenkatalog wird so generiert, dass er nur Fragen für Beschäftigte der zu befragenden zielgruppen enthält.

Die Generierung des Fragenkataloges, die Auswertung der Fragen und somit die Ermittlung der Ursachen von Störungen und Leistungsbegrenzungen kann dadurch besonders schnell und exakt ermöglicht werden, dass
- die Daten über die Ursachen von Störungen und Leistungsbegrenzungen in einer ersten Datenbank gespeichert sind,
- die Daten über die zu untersuchende Anlage in einer zweiten Datenbank gespeichert sind,
- der Fragenkatalog aus den Daten der ersten und der zweiten Datenbank von einer Datenverarbeitungseinheit generiert wird und von einer Ausgabeeinheit ausgegeben wird,
- die Antworten der Beschäftigten über eine Eingabeeinheit erfasst und in der zweiten Datenbank abgespeichert werden,
- die Ursachen von Störungen und Leistungsbegrenzungen anhand der abgespeicherten Antworten der Beschäftigten durch die Datenverarbeitungseinheit ermittelt werden.
   Eine erfindungsgemäße Vorrichtung zur schnellen und exakten Generierung des Fragenkataloges und der Bewertung der Fragen weist deshalb folgende Komponenten auf;
- eine erste Datenbank mit Daten über Ursachen von Störungen und Leistungsbegrenzungen in einer Vielzahl von Anlagen,
- eine zweite Datenbank mit Daten über die zu untersuchende Anlage,
- eine Ausgabeeinrichtung zur Ausgabe eines Fragekataloges zu diesen Ursachen aus diesen Daten,
- eine Eingabeeinrichtung zur Eingabe von Antworten von Beschäftigten der Anlage auf die Fragen des Fragenkataloges und zur Eingabe der Daten über die zu untersuchende Anlage,
- eine Datenverarbeitungseinheit zur Generierung des Fragenkataloges aus den Daten der ersten Datenbank und der zweiten Datenbank und zur Ermittlung der Ursachen von Störungen und/oder Leistungsbegrenzungen der zu untersuchenden Anlage durch Auswertung der Antworten der Beschäftigten auf die Fragen des Fragenkataloges.

Zentrales Element der Vorrichtung ist die erste Datenbank mit Daten über allgemein in Anlagen möglichen Ursachen von Störungen und Leistungsbegrenzungen. Diese Daten können über eine Vielzahl von Anlagen und den darin enthaltenen technischen Einrichtungen gesammelt werden und somit einen breiten Wissensfundus für die Bewertung des technischen Zustandes einer konkreten Anlage darstellen. Eine zweite Datenbank enthält Daten über die zu untersuchende Anlage und ermöglicht es somit, diese Daten mit den in der ersten Datenbank gespeicherten Daten zu vergleichen und hierdurch aus der ersten Datenbank die Daten zu erfassen, die für die konkret zu untersuchende Anlage relevant sind. Mit Hilfe einer Datenverarbeitungseinheit wird aus den Daten der ersten Datenbank und den Daten der zweiten Datenbank der Fragenkatalog zu möglichen technischen Problemen in der zu bewertenden Anlage generiert und über eine Ausgabeeinrichtung ausgegeben.

Die erste Datenbank kann sich hierbei fest installiert an einer zentralen Stelle, z.B. bei einem technischen Dienstleister, befinden, während die zweite Datenbank, die Datenverarbeitungseinheit und die Ein- und Ausgabeeinheiten bewegbar sind und sich z.B. vor Ort in der zu untersuchenden Anlage befinden. Hierdurch kann die erste Datenbank mit den allgemeinen Ursachendaten an zentraler Stelle gepflegt, erweitert und aktualisiert werden, während der Fragenkatalog vor Ort in der Anlage generiert und ausgegeben werden kann. Über eine Datenkommunikationsverbindung zu der ersten Datenbank kann die Datenverarbeitungseinheit vor Ort in der Anlage auf die Daten der ersten Datenbank zugreifen.

Die erste Datenbank kann aber auch zusammen mit der zweiten Datenbank, der Datenverarbeitungseinheit und den Ein- und Ausgabeeinheiten bewegbar sein und sich z.B. vor Ort in der zu untersuchenden Anlage befinden.

Generell muss es sich bei den beiden Datenbanken nicht um zwei physikalisch getrennte Datenspeicher handeln. Vielmehr kann es sich auch um zwei unterschiedliche Speicherbereiche in einem physikalisch gemeinsamen Datenspeicher ("Shared memory") handeln. Die Datenverarbeitungseinheit, die zweite Datenbank, gegebenenfalls die erste Datenbank und die Ein- und Ausgabeeinheiten können integraler Bestandteil einer einzigen mobilen Rechnereinheit sein.

Dabei sind die Daten über die Ursachen jeweils Zielgruppen zugeordnet, die Daten über die zu bewertende Anlage enthalten Angaben über die zu befragenden zielgruppen und der Fragenkatalog wird so generiert, dass er nur Fragen für Beschäftigte der zu befragenden Zielgruppen enthält.

Die Erfindung sowie weitere vorteilhafte Ausgestaltungen der Erfindung gemäß den Merkmalen der Unteransprüche werden im Folgenden anhand von Ausführungsbeispielen in den Figuren näher erläutert. Es zeigen:
- FIG 1: eine vereinfachte Darstellung einer Anlage zur Herstellung von Papier,
- FIG 2: eine erfindungsgemäße Vorrichtung zur Ermittlung der Ursachen von Störungen und Leistungsbegrenzungen in einer Anlage,
- FIG 3: ein Beispiel für die in der ersten und zweiten Datenbank der Vorrichtung gemäß FIG 2 gespeicherten Daten und die Generierung eines Fragenkataloges,
- FIG 4: ein System zur Bereitstellung und Aktualisierung der in der ersten Datenbank enthaltenen Daten.

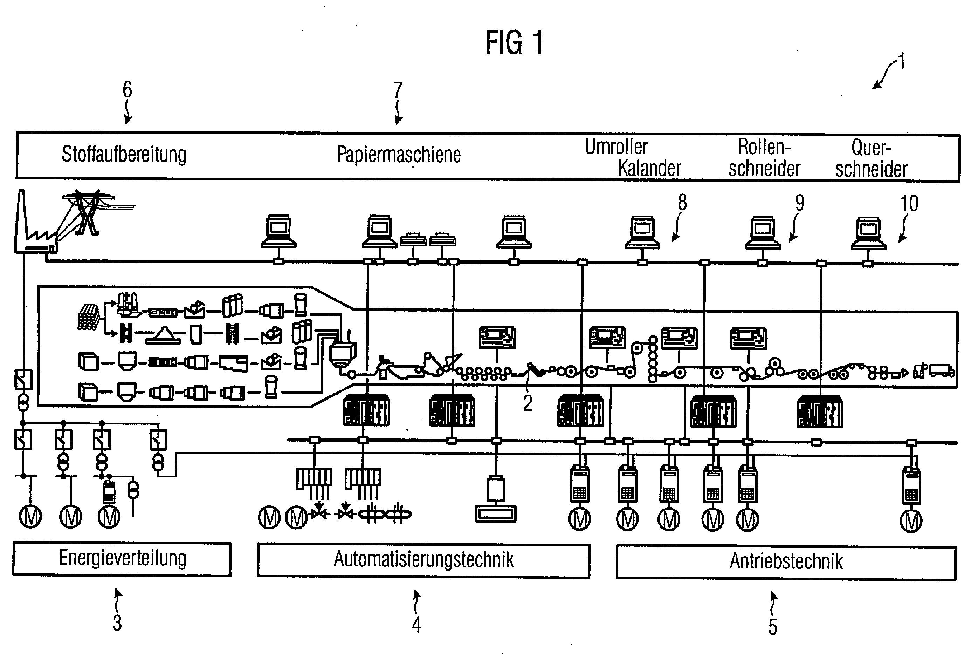

**Figur 1** zeigt in vereinfachter Darstellung eine Anlage 1 zur Herstellung einer durchlaufenden Papierbahn 2. Die Anlage 1 besteht aus den Anlagenteilen Stoffaufbereitung 6, Papiermaschine 7, Umroller/Kalander 8, Rollenschneider 9, und Querschneider 10. Sämtliche dieser Anlagenteile beinhalten Komponenten der Energieverteilung 3, der Automatisierungstechnik 4 und der Antriebstechnik 5. Insgesamt stellt die Anlage 1 somit ein komplexes System verschiedenster, zusammenwirkender technischer Einrichtungen dar. Aufgrund des komplexen Zusammenwirkens der verschiedenen Anlagenteile und Einrichtungen lassen sich Wirkungsketten zwischen den verschiedenen Anlagenteilen nur schwer finden, Störungen und Leistungsbegrenzungen können von einem Anlagenbetreiber nur schwer ermittelt und der technische Zustand der Anlage nur schwer bewertet werden.

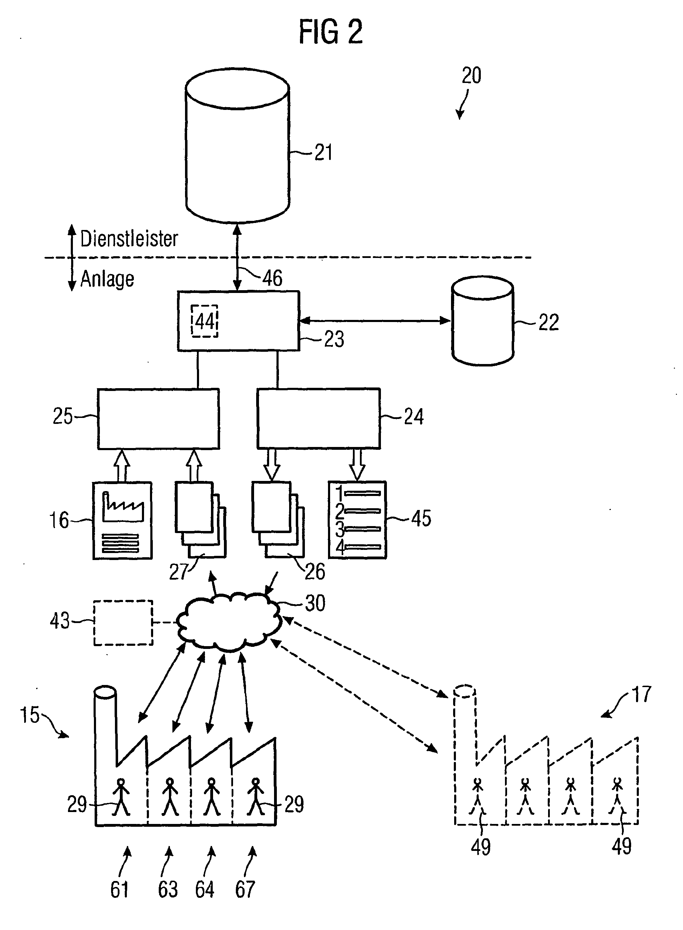

**Figur 2** zeigt eine erfindungsgemäße Vorrichtung 20 zur Ermittlung von Ursachen von Störungen und Leistungsbegrenzungen in einer Anlage 15. Die Anlage weist die Anlagenteile 61, 63, 64 und 67 auf, die in der Anlage beschäftigten Personen sind mit 29 bezeichnet. Die Vorrichtung 20 enthält eine erste Datenbank 21 mit Daten über allgemein in Anlagen möglichen Ursachen von Störungen und Leistungsbegrenzungen. Sie stellt somit einen umfassenden Wissenspool über Probleme dar, die in anderen Anlagen bereits aufgetreten sind und potentiell auch in der zu untersuchenden Anlage 15 auftreten können.

Eine zweite Datenbank 22 enthält Daten über die zu untersuchende Anlage 15. Diese Daten werden vorab von dem Betreiber der Anlage 15, z.B. mittels eines Fragebogens 16, abgefragt und über eine Eingabeeinheit 25 und eine Datenverarbeitungseinheit 23 in der zweiten Datenbank 22 abgespeichert.

Aus den Daten der ersten Datenbank 21 und der zweiten Datenbank 22 wird mit der Datenverarbeitungseinheit 23 ein Fragenkatalog zu möglichen Ursachen von Störungen und Leistungsbegrenzungen in der zu untersuchenden Anlage generiert. Dieser Fragenkatalog 26 wird über die Ausgabeeinrichtung 24 in Papierform oder elektronischer Form ausgegeben.

Die Befragung der Beschäftigten 29 der Anlage 15 erfolgt bevorzugt in Form von persönlichen Interviews zwischen den für die Untersuchung verantwortlichen Personen und den Beschäftigten 29, da in persönlichen Gesprächen die Preisgabe auch sensibler Informationen durch die Beschäftigten 29 am besten erzielbar ist. Alternativ kann die Befragung der Beschäftigten 29 auch über ein Datennetzwerk 30 erfolgen. Hierzu sind die Ausgabeeinheit 26 und die Eingabeeinheit vorteilhafterweise über ein Datenkommunikationsnetzwerk 30 (z.B. ein Intranet) mit den Beschäftigten 29 verbindbar. So können die Fragen z.B. in Form von E-Mails an die Beschäftigten übermittelt werden oder die Beantwortung der Fragen über einen Webserver 43 erfolgen. Dies bietet sich insbesondere an, wenn eine große zahl von Beschäftigten in kurzer Zeit zu befragen ist.

Die Antworten 27 der Beschäftigten 29 auf die Fragen werden über die Eingabeeinrichtung 25 in die Vorrichtung 20 eingegeben und in der zweiten Datenbank 22 abgespeichert. Die Datenverarbeitungseinheit 23 ermittelt anschließend anhand der Antworten 27 der Beschäftigten 29 auf die Fragen des Fragenkataloges 26 und einer in der Datenverarbeitungseinheit 23 hinterlegten Bewertungsregel 44 die Ursachen von Störungen und/oder Leistungsbegrenzungen der Anlage 15. Die von der Datenverarbeitungseinheit 23 ermittelten Bewertungsergebnisse 45 werden über die Ausgabeeinheit 24 ausgegeben.

Gemäß einer besonders vorteilhaften Ausgestaltung der Erfindung wird die Vorrichtung 20 von einem technischen Dienstleister zur Verfügung gestellt und gepflegt. Bevorzugt wird auch die Befragung der Beschäftigten durch einen technischen Dienstleister durchgeführt.

Die Datenbank 21 kann ortsfest installiert sein, z.B. in der zentrale des Dienstleisters, während sich die zweite Datenbank 22, die Datenverarbeitungseinheit 23, die Ausgabeeinheit 24 und die Eingabeeinheit 25 lokal vor Ort in der zu untersuchenden Anlage 15 befinden. Die Datenverarbeitungseinheit 23 steht dann über eine bidirektionale Kommunikationsverbindung 46 mit der Datenbank 21 im Datenaustausch. Die gesamte Vorrichtung 20 kann aber auch als mobile Einheit ausgebildet sein. So können z.B. die Datenverarbeitungseinheit 23, die Ausgabeeinheit 24 und die Eingabeeinheit 25 Bestandteile eines mobilen Rechnersystems sein, wobei die Datenbanken 21 und 22 im Speicher des mobilen Rechnersystems hinterlegt sind.

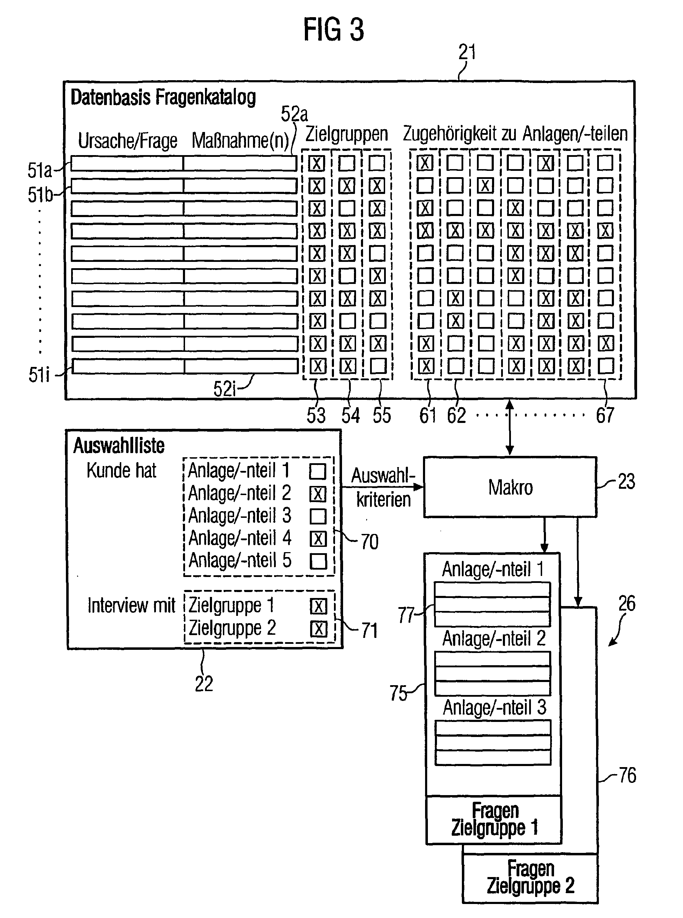

**Figur 3** zeigt ein besonders vorteilhaftes Ausführungsbeispiel für die in der ersten (21) und zweiten (22) Datenbank der Vorrichtung 20 gemäß FIG 2 gespeicherten Daten und die Generierung des Fragenkataloges 26. In der ersten Datenbank 21 sind Daten 51a bis 51i über Ursachen für allgemein in Anlagen möglichen Störungen oder Leistungsbegrenzungen gespeichert.
Die Ursachen können hierbei auch bereits in Form von Fragestellungen nach den Ursachen gespeichert sein.

Bevorzugt sind den Daten 51a-i jeweils eine oder mehrere Verbesserungsmaßnahmen 52a-i zugeordnet. So ist z.B. der Frage 51a die Maßnahme 52a, der Frage 51b die Maßnahme 52b etc. zugeordnet. Wird bei der Auswertung der Antworten eine bestimmt Ursache für eine Störung oder Leistungsbegrenzung identifiziert, kann automatisch von der Vorrichtung 20 eine Verbesserungsmaßnahme vorgeschlagen werden.

Vorteilhafterweise sind die Daten 51a-i über die Ursachen jeweils Zielgruppen 53, 54, 55 zugeordnet, die Daten über die zu untersuchende Anlage 15 enthalten Angaben über die zu befragende Zielgruppen und der Fragenkatalog 26 wird so generiert, dass er nur Fragen für Beschäftigte 29 der zu befragenden Zielgruppen enthält. Im Beispiel der Figur 3 sind in der ersten Datenbank 21 drei zielgruppen 53, 54, 55 definiert. Die Frage 51a ist nur der Zielgruppe 53 zugeordnet. Die Frage 51b ist den Zielgruppen 53, 54 und 55 zugeordnet, etc. In der zweiten Datenbank 22 sind Daten 71 über zu befragende zielgruppen enthalten.

Durch die Zuordnung der Fragen/Ursachen zu Zielgruppen kann der Fragenkatalog selektiv auf zielgruppen in der zu untersuchenden Anlage ausgerichtet werden, d.h. dass eine zielgruppe nur die sie betreffenden Fragen erhält. Somit kann die Befragung schnell und aufwandsarm durchgeführt werden.

In entsprechend vorteilhafter weise sind die Daten 52a-i über die Fragen/Ursachen jeweils Anlagenteilen 61 - 67 zugeordnet, die Daten der zweiten Datenbank 22 enthalten Angaben 70 über in der zu untersuchenden Anlage 15 vorkommende Anlagenteile und der Fragenkatalog 26 wird so generiert, dass er nur Fragen für in der Anlage 15 vorkommende Anlagenteile enthält. Im Beispiel der Figur 3 sind in der zweiten Datenbank 22 sechs Anlagenteile 61 - 67 definiert. Die Frage 51a ist den Anlagenteil 61 und 65, die Frage 51b ist dem Anlagenteil 63 etc. zugeordnet. In der zweiten Datenbank 22 sind die für die Anlage 15 relevanten Anlagenteile 71 definiert.

Durch die Zuordnung der Fragen/Ursachen zu Anlagenteilen kann der Fragenkatalog selektiv auf die Anlagenteile ausgerichtet werden, d.h. dass er nur Fragen zu Anlagenteilen enthält, die in der Anlage 15 vorkommen. Somit kann die Befragung schnell und aufwandsarm durchgeführt und die Genauigkeit der Untersuchungen verbessert werden. Zugleich wird die Auswertung der antworten vereinfacht und Wirkungsketten zwischen verschiedenen Anlagenteilen können besser erkannt werden.

Bevorzugt wird dem Anlagenbetreiber eine Auswahlliste mit den in der Datenbank 21 definierten Zielgruppen 53, 54, 55 und Anlagenteilen 61 - 67 zur Verfügung gestellt und seine Auswahl in der zweiten Datenbank 22 als Daten 70, 71 abgespeichert.

Der von der Datenverarbeitungseinheit 23 generierte Fragenkatalog 26 ist bevorzugt gemäß FIG 3 nach Zielgruppen sortiert. Innerhalb der zielgruppen liegt wiederum eine Sortierung nach Anlagenteilen vor. Hierdurch kann die Befragung der Beschäftigten besonders schnell und aufwandsarm durchgeführt werden.

Durch Auswertung der Antworten der Beschäftigten können die tatsächlichen und potentiellen Ursachen für Störungen und Leistungsbegrenzungen gewonnen werden. Die Auswertung kann z.B. auf der Häufigkeit gleicher Antworten der Beschäftigten auf eine bestimmte Frage oder einen großen Abweichung der Antworten innerhalb einer oder mehrere Zielgruppen beruhen. Wichtige Erkenntnisse können auch dadurch gewonnen werden, dass die Antworten von verschiedenen Zielgruppen und verschiedenen Anlagenteilen miteinander verglichen werden.

Gemäß einer vorteilhaften Ausgestaltung der Erfindung erfolgt die Auswertung jeweils nur bezogen auf Anlagenteile, d.h. über mehrere Fragen betreffend einen bestimmten Anlagenteil.

Vorteilhafterweise kann mit den Antworten und mit Hilfe einer Bewertungsregel eine Bewertung des technischen Zustandes der Anlage durchgeführt werden.

Können die befragten Beschäftigten zu vielen Fragen keine Antworten gegeben werden konnten, sind Antworten verschiedener Gruppen zu derselben Frage stark abweichend sind und werden nur wenige Verbesserungsmaßnahmen auch angegangen und umgesetzt, kann z.B. eine relativ schlechte Bewertung erfolgen,

Können die befragten Beschäftigten zu einigen Fragen keine Antworten gegeben, waren Antworten verschiedener Gruppen zu , derselben Frage nur wenig abweichend waren und werden Verbesserungsmaßnahmen angegangen und umgesetzt, kann z.B. eine mittlere Bewertung vergeben werden.

Eine sehr gute Bewertung kann z.B. dann erfolgen, wenn die Antworten sicher und ohne große Überlegungen von den Beschäftigten gegeben worden sind, Antworten verschiedener Gruppen zu derselben Frage deckungsgleich sind und die Ergebnisse aller bisherigen Verbesserungsmaßnahmen dokumentiert sind und erfolgreich waren.

Zusätzlich können für die Anlagenteile mit geringen Bewertungen Maßnahmen für Verbesserungen durch die Vorrichtung 20 vorgeschlagen werden. So können bei Fragen, die von den Beschäftigten nicht beantwortet wurden, von der Vorrichtung 20 automatisch die zugehörigen Maßnahmen vorgeschlagen werden. Entsprechend einer in der ersten Datenbank 21 hinterlegten Gewichtung können diese Maßnahmen priorisiert werden. Die Gewichtung kann insbesondere branchenabhängig in der ersten Datenbank hinterlegt sein.

Gemäß einer besonders vorteilhaften Ausgestaltung der Erfindung betreffen die Fragen des Fragenkataloges 26 Antriebsund/oder -Automatisierungskomponenten der Anlage. Insbesondere Antriebe sind zentrale Bestandteile vieler Anlagen und wesentliche Faktoren, die die Zuverlässigkeit, Leistung und Qualität der Anlagen bestimmen.

Beispiele für Fragen zu dem Antriebssystem und vorschlagbare Verbesserungsmaßnahmen können sein:
- Haben Sie genügend Ersatzteile für das System vor Ort? Falls nicht, wie zuverlässig ist Ihre Ersatzteilversorgung?
- Überprüfen Sie regelmäßig die Kondensatoren Ihrer Ersatzstromrichter? Falls nicht, installieren Sie eine Wartungsprozedur.
- Ist Ihre Hardware-/Software-Dokumentation auf dem aktuellen Stand? Falls nicht, sollte ein Review durchgeführt werden.

Weitere Fragen und vorschlagbare Verbesserungsmaßnahmen können den Betrieb der Anlage betreffen:
- Stellt Ihnen Ihr System alle benötigten relevanten Werte zur Verfügung? Falls nicht, könnte eine Modernisierung oder ein Datenerfassungs- oder Überwachungssystem helfen?
- Läuft die Maschine stabil bei allen Geschwindigkeiten und mit allen Produkten? Falls nicht, sollte die Systemstruktur überprüft werden.
- Verhält sich das System so wie Sie es erwarten, wenn Sie Einstellungen ändern? Falls nicht, könnte die Einstellung und Regelungsstruktur falsch sein.

Weitere Fragen und Verbesserungsmaßnahmen können die Regelung und Steuerung oder die Lastverteilung betreffen:
- Werden Ihre Antriebsparameter von Zeit zu zeit geändert? Falls ja, was ist der Grund hierfür? Ist das Regelungskonzept korrekt? Oder gibt es außergewöhnlichen Verschleiß?

Im Fall einer Anlage zur Herstellung von Papier können weitere Fragen und Verbesserungsmaßnahmen z.B. die Rollenschneider betreffen.

Eine schlechte Bewertung für einen Anlagenteil kann bedeuten, dass es Schwachpunkte in diesen Anlagenteilen gibt. Diese wurden bisher noch nicht ermittelt und berücksichtigt. Es gibt somit bedeutendes Potential für Verbesserungen. Diese Möglichkeiten zur Verbesserung sind den in diesen Anlagenteilen Beschäftigten bekannt.

Eine mittelmäßige Bewertung zeigt beispielsweise auf, dass es nicht sehr viele Schwachpunkte gibt, die noch nicht in der Anlage behandelt wurden. Es gibt jedoch Potential für Verbesserungen in einigen Gebieten. Die Möglichkeiten für Verbesserungen sind den Beschäftigten in diesen Anlagenteilen nicht bekannt.

Eine sehr gute Bewertung zeigt auf, dass Maßnahmen für Verbesserungen bereits eingeleitet sind. Alle Beteiligten sind gut informiert und unterstützen diese Maßnahmen. Es gibt eine kontinuierliche Suche nach neuen Potentialen für Verbesserungen und diese werden konsequent realisiert. Es gibt nahezu keine kritischen Gebiete und nur wenig Potential für Verbesserung.

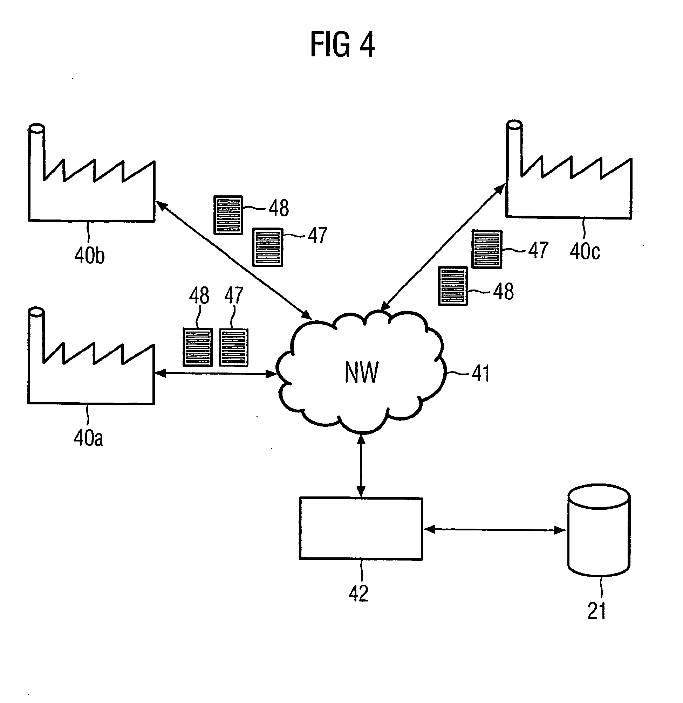

Die Bereitstellung der Daten (51a-i) über Ursachen von Störungen und Leistungsbegrenzungen kann - wie in **Figur 4** dargestellt - dadurch auf einfache Weise erfolgen, dass die Daten aus Störungsmeldungen 47 und/oder Einsatzberichten 48 von anderen Anlagen 40a, 40b, 40c gewonnen werden. Bei den Störungsmeldungen 47 handelt es sich beispielsweise um anlageninterne Berichte von Wartungs- und Reparaturpersonal über aufgetretene Störungen und deren Ursachen und Maßnahmen zur Behebung der Störungen. Die Einsatzberichte 48 können darüber hinaus Informationen über Untersuchungen über leistungsbegrenzende Faktoren und zugehörige verbesserungsmaßnahmen enthalten. Die Datenbank 21 steht hierzu über eine Datenverarbeitungseinheit 42 und ein Datenkommunikationsnetzwerk 41 (z.B. das Internet) mit den Anlagen 40a - c in Verbindung und empfängt die Störungsmeldungen 47 und Einsatzberichte 48 von den Anlagen 40a-c. Die Störungsmeldungen 47 und Einsatzberichte 48 können zur Ergänzung oder Aktualisierung der in der Datenbank 21 enthaltenen Daten genutzt werden.

## Patentansprüche

1. Verfahren zur Ermittlung der Ursachen von Störungen und Leistungsbegrenzungen in einer Anlage (15), wobei das Verfahren die folgenden verfahrensschritte umfasst:
- Bereitstellen von Daten (51a-i) über Ursachen von Störungen und Leistungsbegrenzungen in einer größeren Anzahl von Anlagen (40a-c),
- Generieren eines Fragenkataloges (26) zu diesen Ursachen aus diesen Daten,
- Einholen von Antworten (27) von Beschäftigten (29) in der zu untersuchenden Anlage (15) auf die Fragen des Fragenkataloges (26),
- Ermittlung der Ursachen von Störungen und Leistungsbegrenzungen der zu untersuchenden Anlage (15) durch Auswertung der Antworten (27) der Beschäftigten (29) auf die Fragen des Fragenkataloges (26),
wobei Daten (70, 71) über die zu untersuchende Anlage (15) abgefragt werden, aus den Daten (51a-i) über Ursachen von Störungen und Leistungsbegrenzungen diejenigen ausgewählt werden, die für die zu untersuchende Anlage (15) relevant sind und der Fragenkatalog (26) nur Fragen enthält, die die zu untersuchende Anlage (15) betreffen, **dadurch gekennzeichnet, dass**
- die Daten (51a-i) über die Ursachen jeweils Zielgruppen (53-55) zugeordnet sind,
- die Daten (70,71) über die zu untersuchende Anlage (15) Angaben (71) über zu befragende Zielgruppen (53-33) enthalten und
- der Fragenkatalog (26) so generiert wird, dass er nur Fragen für Beschäftigte (29) der zu befragenden Zielgruppen (53-55) enthält.

2. verfahren nach Anspruch 1, wobei
- die Daten (51a-i) über die Ursachen von Störungen und Leistungsbegrenzungen in einer ersten Datenbank (21) gespeichert sind,
- die Daten (70,71) über die zu untersuchende Anlage (15) in einer zweiten Datenbank (22) gespeichert sind,
- der Fragenkatalog (26) aus den Daten der ersten (21) und der zweiten Datenbank (22) von einer Datenverarbeitungseinheit (23) generiert wird und von einer Ausgabeeinheit (24) ausgegeben wird,
- die Antworten (27) der Beschäftigten (29) über eine Eingabeeinheit (27) erfasst und in der zweiten Datenbank (22) abgespeichert werden,
- die Ursachen von Störungen und Leistungsbegrenzungen anhand der abgespeicherten Antworten (27) der Beschäftigten (29) durch die Datenverarbeitungseinheit (23) ermittelt werden.

3. Verfahren nach Anspruch 2, wobei in der ersten Datenbank (21) zu den Daten (51a-i) über die Ursachen von Störungen und Leistungsbegrenzungen jeweils auch Daten (52a-i) über verbesserungsmaßnahmen abgespeichert sind.

4. Verfahren nach einem der Ansprüche 2 bis 3, wobei
- die Daten (51a-i) über die Ursachen jeweils Anlagenteilen (61-67) zugeordnet sind,
- die Daten (70,71) der zweiten Datenbank (22) Angaben (70) über in der zu untersuchenden Anlage (15) vorkommende Anlagenteile (61-67) enthalten und
- der Fragenkatalog (26) nur Fragen auf in der Anlage (15) vorkommende Anlagenteile (61-67) enthält.

5. verfahren nach einem der vorhergehenden Ansprüche,
wobei die Fragen des Fragenkataloges (26) Antriebs- und/oder Automatisierungskomponenten der Anlage (15) betreffen.

6. Verfahren nach einem der vorhergehenden Ansprüche,
wobei die Antworten (27) der Beschäftigten (29) durch Interviews eingeholt werden.

7. verfahren nach einem der Ansprüche 1 bis 5,
wobei die Antworten (27) der Beschäftigten (29) über ein Datennetzwerk (30) eingeholt werden.

8. Verfahren nach einem der vorhergehenden Ansprüche,
wobei die Daten über die Ursachen von Störungen und Leistungsbegrenzungen aus Störungsmeldungen (47) und/oder Einsatzberichten (48) von anderen Anlagen (40a-c) gewonnen werden.

9. Verfahren nach einem der vorhergehenden Ansprüche,
wobei das Verfahren durch einen technischen Dienstleister durchgeführt wird.

10. Verfahren nach einem der vorhergehenden Ansprüche,
wobei anhand der Antworten (27) der Beschäftigten (29) und mit Hilfe einer festgelegten Bewertungsregel (44) eine Bewertung des technischen Zustandes der Anlage (15) erfolgt.

11. Vorrichtung (20) zur Ermittlung der Ursachen von Störungen und Leistungsbegrenzungen in einer Anlage (15) mit
- einer ersten Datenbank mit Daten (51a-i) über Ursachen von Störungen und Leistungsbegrenzungen in einer Vielzahl von Anlagen (40a-c),
- einer zweiten Datenbank (22) mit Daten (70,71) über die zu untersuchende Anlage (15),
- einer Ausgabeeinrichtung (24) zur Ausgabe eines Fragekataloges (26),
- einer Eingabeeinrichtung (25) zur Eingabe von Antworten (27) von Beschäftigten (29) der Anlage (15) auf die Fragen des Fragenkataloges (26) und zur Eingabe der Daten (70,71) über die zu untersuchende Anlage,
- einer Datenverarbeitungseinheit (23) zur Ermittlung der Ursachen von Störungen und/oder Leistungsbegrenzungen der zu untersuchenden Anlage (15) durch Auswertung der Antworten (27) der Beschäftigten (29) auf die Fragen des Fragenkataloges (26),
**dadurch gekennzeichnet, dass** die Datenverarbeitungseinheit (23) den Fragenkatalog (26) aus den Daten der ersten Datenbank (21) und der zweiten Datenbank (22) generiert, wobei
- die Daten (51a-i) über die Ursachen jeweils zielgruppen (53-55) zugeordnet sind,
- die Daten (70,71) über die zu bewertende Anlage (15) Angaben (71) über zu befragende zielgruppen (53-55) enthalten und
- der Fragenkatalog (26) so generiert wird, dass er nur Fragen für Beschäftigte (29) der zu befragenden zielgruppen (53-55) enthält.

12. Vorrichtung nach Anspruch 11, wobei in der ersten Datenbank (21) zu den Daten (51a-i) über die Ursachen von Störungen und Leistungsbegrenzungen jeweils auch Daten (52a-i) über Verbesserungsmaßnahmen abgespeichert ist.

13. Vorrichtung nach einem der Ansprüche 11 bis 12, wobei
- die Daten (51a-i) über die Ursachen jeweils Anlagenteilen (61-67) zugeordnet sind
- die Daten (70,71) der zweiten Datenbank (22) Angaben (70) über in der zu untersuchenden Anlage (15) vorkommende Anlagenteile (61-67) enthalten und
- der Fragenkatalog (26) nur Fragen für in der Anlage (15) vorkommende Anlagenteile (61-67) enthält.

14. Vorrichtung nach einem der Ansprüche 11 bis 13,
wobei die Ausgabeeinheit (26) und die Eingabeeinheit (25) über ein Datenkommunikationsnetzwerk (30) mit den Beschäftigten (29) verbindbar sind.

15. Vorrichtung nach einem der Ansprüche 11 bis 14,
wobei die erste Datenbank (21) über ein Datennetzwerk (41) mit einer Vielzahl von Anlagen (40a-c) verbindbar ist.

## Claims

1. Method for determining the causes of malfunctions and performance limits in an installation (15) with the method comprising the following steps:
- provision of data (51a-i) about causes of malfunctions and performance limits in a larger number of installations (40a-c),
- generation of a questionnaire (26) about these causes from this data,
- collection of responses (27) from employees (29) in the installation under investigation (15) to the questions in the questionnaire (26),
- determination of the causes of malfunctions and performance limits of the installation under investigation (15) by analysing the responses (27) of the employees (29) to the questions in the questionnaire (26),
with data (70, 71) about the installation under investigation (15) being requested, with data of relevance to the installation under investigation (15) being selected from the data (51a-i) about causes of malfunctions and performance limits and the questionnaire (26) only containing questions relating to the installation under investigation (15),
**characterised in that**
- the data (51a-i) about causes of malfunctions is assigned respectively to target groups (53 to 55),
- the data (70, 71) about the installation under investigation (15) contains details (71) about the target groups (53 to 33) to be questioned
- the questionnaire (26) is generated such that it only contains questions for employees (29) in the target groups (53 to 33) to be questioned.

2. Method according to claim 1, with
- the data (51a-i) about the causes of malfunctions and performance limits being stored in a first database (21),
- the data (70, 71) about the installation under investigation (15) being stored in a second database (22),
- the questionnaire (26) being generated by a data processing unit (23) from the data in the first (21) and second (22) databases and being output by an output unit (24),
- the responses (27) of the employees (29) being captured via an input unit (27) and stored in the second database (22),
- the causes of malfunctions and performance limits being determined by the data processing unit (23) based on the stored responses (27) of the employees (29).

3. Method according to claim 2, with data (52a-i) about improvement measures being stored in the first database (21) in addition to the data (51a-i) about the causes of malfunctions and performance limits.

4. Method according to one of claims 2 to 3, with
- the data (51a-i) about the causes being assigned respectively to installation elements (61 to 67),
- the data (70, 71) in the second database (22) containing details (70) about installation elements (70) occurring in the installation under investigation (15) and
- the questionnaire (26) only containing questions for installation elements (61 to 67) occurring in the installation (15).

5. Method according to one of the preceding claims, with the questions in the questionnaire (26) relating to drive and/or automation components of the installation (15).

6. Method according to one of the preceding claims, with the responses (27) of the employees (29) being collected by means of interviews.

7. Method according to one of claims 1 to 5, with the responses (27) of the employees (29) being collected via a data network (30).

8. Method according to one of the preceding claims, with the data about the causes of malfunctions and performance limits being obtained from malfunction reports (47) and/or field reports (48) from other installations (40a-c).

9. Method according to one of the preceding claims, with the method being implemented by a technical service provider.

10. Method according to one of the preceding claims, with an assessment of the technical state of the installation (15) being made based on the responses (27) of the employees (29) and with the aid of a defined assessment rule (44).

11. Device (20) for determining the causes of malfunctions and performance limits in an installation (15) with
- a first database containing data (51a-i) about causes of malfunctions and performance limits in a plurality of installations (40a-c),
- a second database (22) containing data (70, 71) about the installation under investigation (15),
- an output mechanism (24) to output a questionnaire (26),
- an input mechanism (25) to input responses (27) of employees (29) working in the installation (15) to the questions in the questionnaire (26) and to input the data (70, 71) about the installation under investigation,
- a data processing unit (23) to determine the causes of malfunctions and/or performance limits of the installation under investigation (15) by analysing the responses (27) of the employees (29) to the questions in the questionnaire (26),
**characterised in that**
the data processing unit (23) generates the questionnaire (26) from the data of the first database (21) and the second database (22), with
- the data (51a-i) about the causes being assigned respectively to target groups (53-55),
- the data (70, 71) about the installation to be assessed (15) containing details (71) about the target groups (53 to 55) to be questioned,
- the questionnaire (26) being generated such that it only contains questions for employees (29) in the target groups (53 to 55) to be questioned.

12. Device according to claim 11, with data (52a-i) about improvement measures also being stored respectively in the first database (21) in addition to the data (51a-i) about the causes of malfunctions and performance limits.

13. Device according to one of claims 11 to 12, with
- the data (51a-i) about the causes being assigned respectively to installation elements (61 to 67) occurring in the installation under investigation (15),
- the questionnaire (26) only containing questions for installation elements occurring in the installation (15).

14. Device according to one of claims 11 to 13, with the output unit (26) and the input unit (25) being able to be connected to the employees (29) via a data communication network (30).

15. Device according to one of claims 11 to 14, with the first database (21) being able to be connected to a plurality of installations (40a-c) via a data network (41).

## Revendications

1. Procédé de détermination des causes de pannes et de limitations de capacité dans une installation ( 15 ), le procédé comprenant les stades suivants :
- on se procure des données ( 51a-i ) sur des causes de pannes et de limitations de capacité dans un assez grand nombre d'installations ( 40a-c ) ;
- on produit un catalogue ( 26 ) de questions sur ces causes à partir de ces données ;
- on recueille des réponses ( 27 ) du personnel ( 29 ) dans l'installation ( 15 ) à analyser aux questions du catalogue ( 26 ) de questions ;
- on détermine les causes des pannes et des limitations de capacité de l'installation ( 15 ) à analyser en exploitant les réponses ( 27 ) du personnel ( 29 ) aux questions du catalogue ( 26 ) de questions ;
dans lequel on interroge des données ( 70, 71 ) sur l'installation ( 15 ) à analyser, on choisit dans les données ( 51a-i ) sur des causes de pannes et de limitations de capacité celles qui sont pertinentes pour l'installation ( 15 ) à analyser et le catalogue ( 26 ) de questions ne contient que des questions qui concernent l'installation ( 15 ) à analyser, **caractérisé en ce que**
- on affecte les données ( 51a-i ) sur les causes respectivement à des groupes ( 53-55 ) de destinataires respectivement ;
- les données ( 70, 71 ) sur l'installation ( 15 ) à analyser contiennent des indications ( 71 ) sur des groupes ( 53-33 ) de destinataires à interroger ; et
- on produit le catalogue ( 26 ) de questions de manière à ce qu'il ne contienne que des questions pour le personnel ( 29 ) des groupes ( 53-55 ) de destinataires à interroger.

2. Procédé suivant la revendication 1, dans lequel
- on mémorise les données ( 51a-i ) sur les causes de pannes et de limitations de capacité dans une première banque ( 21 ) de données ;
- on mémorise les données ( 70, 71 ) sur l'installation ( 15 ) à analyser dans une deuxième banque ( 22 ) de données, on produit le catalogue ( 26 ) de questions à partir des données de la première ( 21 ) et de la deuxième ( 22 ) banques de données par une unité ( 23 ) informatique et on les sort par une unité ( 24 ) de sortie ;
- on relève les réponses ( 27 ) du personnel ( 29 ) par une unité ( 25 ) d'entrée et on les mémorise dans la deuxième banque ( 22 ) de données ;
- on détermine les causes de pannes et de limitations de capacité au moyen des réponses ( 27 ) mémorisées du personnel ( 29 ) par l'unité ( 23 ) informatique.

3. Procédé suivant la revendication 2, dans lequel
- dans la première banque ( 21 ) de données sur les données ( 51a-i ) sur les causes de pannes et de limitations de capacité, on mémorise respectivement aussi des données ( 52a-i ) sur des mesures d'amélioration.

4. Procédé suivant l'une des revendications 2 à 3, dans lequel
- on affecte les données ( 51a-i ) sur les causes respectivement à des parties ( 61-67 ) d'installation ;
- les données ( 70, 71 ) de la deuxième banque ( 22 ) de données contiennent des indications ( 70 ) sur des parties ( 61-67 ) d'installation se trouvant dans l'installation ( 15 ) à analyser ; et
- le catalogue ( 26 ) de questions ne contient que des questions sur des parties ( 61-67 ) d'installation se trouvant dans l'installation ( 15 ).

5. Procédé suivant l'une des revendications précédentes, dans lequel les questions du catalogue ( 26 ) de questions concernent des éléments d'entraînement et/ou d'automatisation de l'installation ( 15 ).

6. Procédé suivant l'une des revendications précédentes,
dans lequel les réponses ( 27 ) du personnel ( 29 ) sont recueillies par des interviews.

7. Procédé suivant l'une des revendications 1 à 5,
dans lequel les réponses ( 27 ) du personnel ( 29 ) sont recueillies par un réseau ( 30 ) de données.

8. Procédé suivant l'une des revendications précédentes,
dans lequel on recueille les données sur les causes de pannes et de limitations de capacité à partir d'indications ( 47 ) de pannes et/ou de rapports ( 48 ) d'utilisation d'autres installations ( 40a-c ).

9. Procédé suivant l'une des revendications précédentes,
dans lequel on effectue le procédé par un prestataire de service.

10. Procédé suivant l'une des revendications précédentes,
dans lequel au moyen des réponses ( 27 ) du personnel ( 29 ) et à l'aide d'une règle ( 24 ) fixe d'évaluation, on effectue une évaluation de l'état technique de l'installation ( 15 ).

11. Dispositif ( 20 ) de détermination des causes de pannes et de limitations de capacité d'une installation ( 15 ) comprenant
- une première banque de données ayant des données ( 51a-i ) sur des causes de pannes et de limitations de capacité d'une pluralité d'installations ( 40a-c ) ;
- une deuxième banque ( 22 ) de données ayant des données ( 70, 71 ) sur l'installation ( 15 ) à analyser;
- un dispositif ( 24 ) de sortie d'un catalogue ( 26 ) de questions ;
- un dispositif ( 25 ) d'entrée de réponses ( 27 ) du personnel ( 29 ) de l'installation ( 15 ) aux questions du catalogue ( 26 ) de questions et d'entrer des données ( 70, 71 ) sur l'installation à analyser ;
- une unité ( 23 ) informatique de détermination des causes de pannes et/ou de limitations de capacité de l'installation ( 15 ) à analyser en exploitant les réponses ( 27 ) du personnel ( 29 ) aux questions du catalogue ( 26 ) de questions,
**caractérisé en ce que** l'unité ( 23 ) informatique produit le catalogue ( 26 ) de questions à partir des données de la première banque ( 21 ) de données et de la deuxième banque ( 22 ) de données, dans lequel
- les données ( 51a-i ) sur les causes sont affectées respectivement à des groupes ( 53-55 ) de destination ;
- les données ( 70, 71 ) sur l'installation ( 15 ) à évaluer contiennent des indications ( 71 ) sur des groupes ( 53-55 ) de destination à interroger ; et
- le catalogue ( 26 ) de questions est produit de manière à ne contenir que des questions pour le personnel ( 29 ) des groupes ( 53-55 ) de destination à interroger.

12. Dispositif suivant la revendication 11, dans lequel dans la première banque ( 21 ) de données sur les données ( 51a-i ) sur les causes de pannes et de limitations de capacité respectivement des données ( 52a-i ) sur des mesures d'amélioration sont également mémorisées.

13. Dispositif suivant l'une des revendications 11 à 12, dans lequel
- les données ( 51a-i ) sur les causes sont affectées respectivement à des parties ( 61-67 ) d'installation ;
- les données ( 70-71 ) de la deuxième banque ( 22 ) de données contiennent des indications ( 70 ) sur des parties ( 61-67 ) d'installation se trouvant dans l'installation ( 15 ) à analyser ; et
- le catalogue ( 26 ) de questions ne contient que des questions sur des parties ( 61-67 ) d'installation se trouvant dans l'installation ( 15 ).

14. Dispositif suivant l'une des revendications 11 à 13, dans lequel l'unité ( 26 ) de sortie et l'unité ( 25 ) d'entrée peuvent communiquer avec le personnel ( 29 ) par un réseau ( 30 ) de communication de données.

15. Dispositif suivant l'une des revendications 11 à 14, dans lequel la première banque ( 21 ) de données peut communiquer avec une pluralité d'installations ( 40a-c ) par un réseau ( 41 ) de données.
